# EUROPEAN PATENT APPLICATION

(11) **EP 2 636 871 A2**
(43) Date of publication of application: **11.09.2013**
(21) Application number: 13157974.0
(22) Date of filing: 06.03.2013
(51) Int. Cl.: F02C 7/04

(54) **Methods and systems for inlet airflow measurement using inert gas**

(30) Priority: 08.03.2012 US 201213415382
(71) Applicant: General Electric Company, Schenectady, New York 12345 (US)
(72) Inventor: Tillery, Steven William, Simpsonville, SC South Carolina 29615 (US); Cook, Jason Nathaniel, Greenville, SC South Carolina 29615 (US)
(74) Representative: Cleary, Fidelma

(57) **Abstract**

Disclosed herein are methods and systems for gas turbine inlet air flow rate measurement using inert gas. In an embodiment, a gas meter (125) may measure the concentration of an injected gas into an air flow. A processor (135) may receive the measurement of the gas concentration and calculate an air mass flow rate based on the gas concentration.

## Description

There are various measurement devices that can directly measure the velocity of air or the air mass flow rate, such as calibrated nozzles, static pressure taps, acoustic/Doppler equipment, etc. Problems with most of these methods include cost and flexibility. For example, a calibrated nozzle can measure the flow rate of air entering a compressor, but it can impose a sizable pressure drop upstream of a gas turbine inlet.

Inlet flow measurements can be taken using static pressure measurements in the inlet bellmouth of a gas turbine. This method works reasonably well at full load, where the airflow rate is high and fairly stable, but the accuracy of this approach diminishes as the airflow rate is reduced. Below full load the aforementioned air flow rate measurement technique is known to be inaccurate and is highly variable which causes the air flow rate to be inferred using other cycle measurements. An accurate understanding of the ratio of fuel to air for a gas turbine and other similar systems can be difficult to obtain with current airflow measurement techniques which can lead to control issues and operational variability. Operational variability leads to cycle heating and cooling variability which may reduce hardware life and output.

Disclosed herein are methods and systems for measuring air mass flow rate. In an embodiment, a method is provided including the steps of injecting a gas into an air flow, mixing the gas with the air, measuring the concentration of the gas mixed with the air, and calculating the air mass flow rate based on the measured concentration of the gas.

In an embodiment, a system includes a gas meter and a processor that may receive a measurement of a concentration of gas from the gas meter and calculate the air mass flow rate based on the measured concentration.

The above description is provided to introduce a selection of concepts in a simplified form that are further described below, and is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

A more detailed understanding may be had from the following description, given by way of example in conjunction with the accompanying drawings wherein:
Figure 1 is an exemplary gas turbine inlet flow measurement system;
Figure 2 illustrates a non-limiting, exemplary method of implementing air mass flow rate; and
Figure 3 is an exemplary block diagram representing a general purpose computer system in which aspects of the present invention thereof may be incorporated.

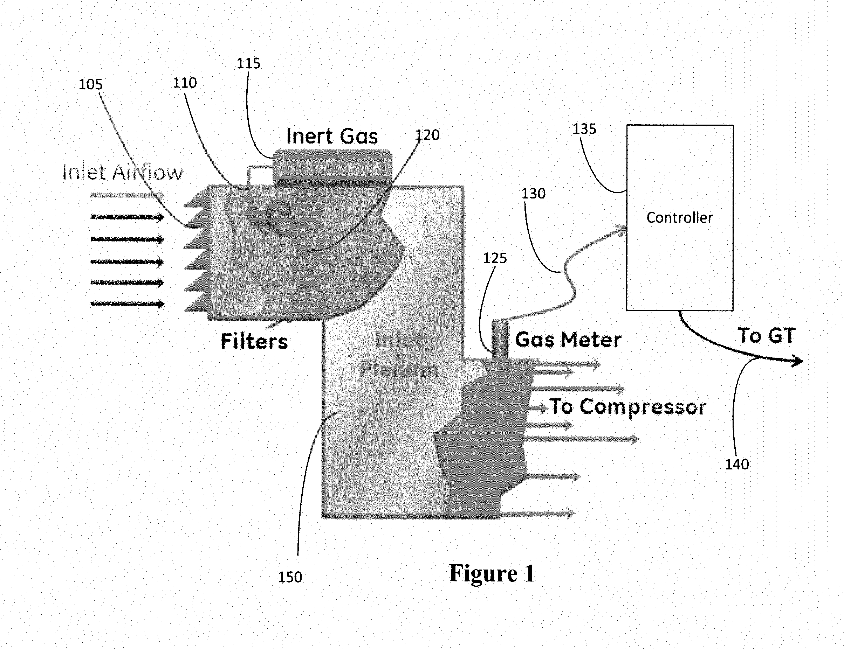

Figure 1 is a graphical representation of an exemplary, non-limiting system in which air mass flow rate using inert gas may be implemented. There is a gas turbine inlet housing 105 wherein air flows. There is container of inert gas 115 and injection point 110 wherein the inert gas may be injected into the inlet housing 105. The injection point 110 may vary. Filter 120 is located downstream of injection point 110. At 150 there is an inlet plenum where the inert gas may mix with the air as it travels to the compressor. Gas meter and probe 125 may be used to measure the composition of the inert gas to air mixture. The gas meter 125 may communicate with controller 135 via communication line 130. The communication line 130 may be wireless or wireline. Controller 135 may control different devices in a power plant. Communication line 140 may allow controller 135 to communicate with a gas turbine (GT). Communication line 140 may be wireless or wireline.

In an embodiment, the inert gas may have injection point 110 at the front end of inlet housing 105 before filter 120. Filter 120 may help with mixing of the inert gas with the air. In addition, placing the injection point 110 and the gas meter 125 in a manner that maximizes the distance between them may also help with the mixture of the air and inert gas by allowing more time and space for the inert gas and air to adequately mix before being measured.

In an embodiment, known quantity of an inert gas is injected into the inlet airflow stream entering the gas turbine via a bleed heat system. After the inert gas is mixed with air, the gas concentration may be measured downstream from the injection point 110 by the gas meter 125. The air mass flow rate may be calculated based on the known quantity of the injected inert gas and the measurement of the gas concentration.

Gas meter 125 may be placed downstream from the injection point 110 to measure the gas concentration level before any extraction of air or gas. Measuring the gas concentration before the extraction of air or gas may give a more accurate measurement of the inert gas concentration and ultimately the air mass flow rate. In an embodiment, associated with a gas turbine system, the measurement of the gas concentration may occur at any point before any air is taken out of the system, such as any turbine cooling air that is extracted from the compressor. The position of gas meter 125 can be before the compressor as shown in Figure 1. The gas meter 125 may also be located within the compressor. Locating the gas meter (or probe communicatively connected with the gas meter) within the compressor itself may assist in a more accurate measurement of inert gas concentration and ultimately air mass flow rate because the compressor may help to fully mix the inert gas and air before the measurement.

The gas injected and ultimately measured by a gas meter may have multiple characteristics. In an embodiment, the injected gas may be a gas that is not already present in the air that is allowed into the inlet. Injecting a gas that is already present in the air may cause inaccurate measurements of air flow. In addition, the injected gas may also be of a composition that does not negatively interact with a particular process (e.g., inert gas). In an embodiment associated with a gas turbine system, the injected gas may be an inert gas (e.g., Neon) that has a composition that does not impede the combustion process. In an embodiment, the inert gas may be a gas mixture (e.g., multiple gases) of known constituents.

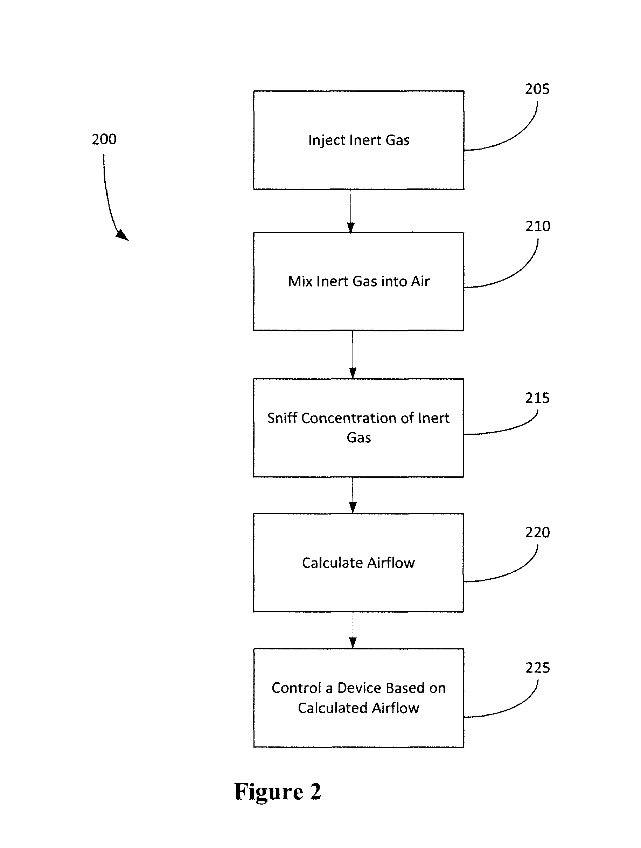

Figure 2 illustrates a non-limiting, exemplary method of implementing an airflow measurement system using inert gas. Method 200 can be performed with the assistance of computing equipment including mobile devices (e.g., tablet computers), servers, or any other device that can execute computing functions.

In an embodiment at block 205, inert gas may be injected into an air flow of a gas turbine inlet. The inert gas may be mixed with the air flow at block 210. At block 215, the gas meter may sniff the mixture of inert gas and air and obtain the concentration level of the inert gas. At block 220, the air mass flow rate may be calculated based on the initial injected amount of the inert gas and the concentration level of the inert gas that was measured downstream from the injection point. At block 225, a device, such as a combustor, may be controlled based on the calculated air mass flow rate.

Once the air mass flow rate is calculated a device may be automatically controlled based on the air mass flow rate. For example, in the combustion processes fuel to air ratios may be analyzed in order to keep the combustor from blowing out. The use of inert gas in measuring airflow may allow a combuster to be controlled closer to blowout boundaries and a compressor, for example, may be pushed closer to stall boundaries.

In an embodiment, processing time may be reduced by controlling equipment directly with an inert gas concentration measurement instead of going through the extra processing step of calculating the airflow based on varying levels of inert gas injected. For example, when the inert gas is injected at a constant level over a time frame, the use of the inert gas concentration measurement (without the subsequent step of measuring air mass flow rate) may be sufficient to safely and efficiently control devices such as a combustor or compressor.

Without in any way limiting the scope, interpretation, or application of the claims appearing herein, a technical effect of one or more of the example embodiments disclosed herein is to provide a measurement of flow rate that may allow a controller the capability to hold tighter compressor and combustion boundaries while taking into account system degradation.

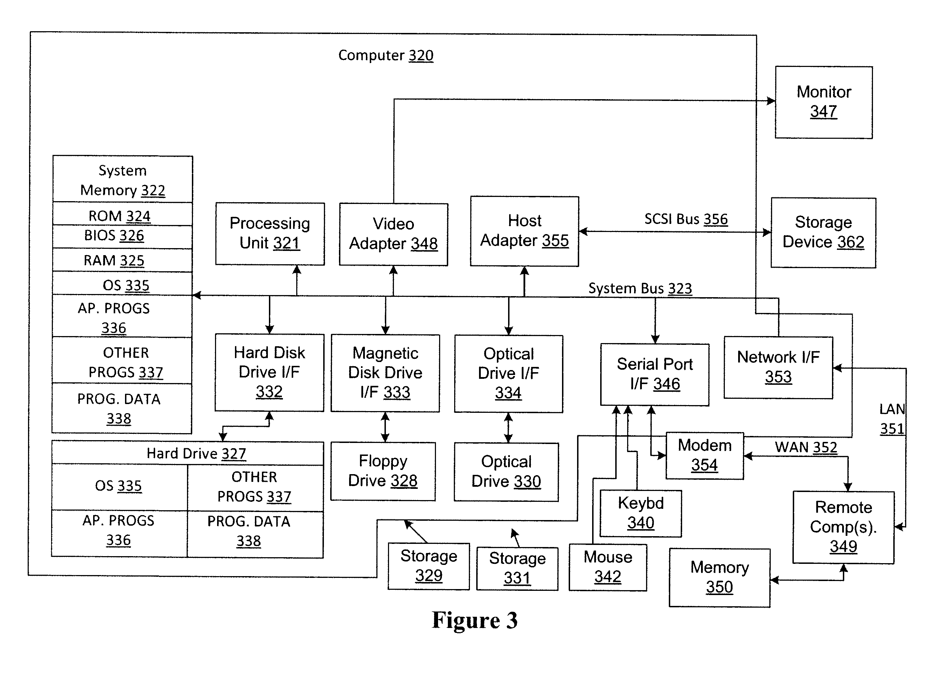

Figure 3 and the following discussion are intended to provide a brief general description of a suitable computing environment in which the present methods and systems described herein and/or portions thereof may be implemented. The gas concentration and subsequent gas turbine control may both be handled through the gas turbine control system (e.g, Mark VIe, or similar). It is possible that a separate computing system may be used in parallel or series with the gas turbine controller to handle the gas concentration calculation and information distribution.

The methods and systems may be described in the general context of computer-executable instructions, such as program modules, being executed by a computer, such as a client workstation, server, or personal computer. Generally, program modules include routines, programs, objects, components, data structures and the like that perform particular tasks or implement particular abstract data types. Moreover, it should be appreciated that the methods and systems described herein and/or portions thereof may be practiced with other computer system configurations, including handheld devices, multi-processor systems, microprocessor-based or programmable consumer electronics, network PCs, minicomputers, mainframe computers and the like. The methods and systems described herein may also be practiced in distributed computing environments where tasks are performed by remote processing devices that are linked through a communications network. In a distributed computing environment, program modules may be located in both local and remote memory storage devices.

Figure 3 is a block diagram representing a general purpose computer system in which aspects of the present methods and systems described herein and/or portions thereof may be incorporated. As shown, the exemplary general purpose computing system includes a computer 320 or the like, including a processing unit 321, a system memory 322, and a system bus 323 that couples various system components including the system memory to the processing unit 321. The system bus 323 may be any of several types of bus structures including a memory bus or memory controller, a peripheral bus, and a local bus using any of a variety of bus architectures. The system memory includes read-only memory (ROM) 324 and random access memory (RAM) 325. A basic input/output system 326 (BIOS), containing the basic routines that help to transfer information between elements within the computer 320, such as during start-up, is stored in ROM 324.

The computer 320 may further include a hard disk drive 327 for reading from and writing to a hard disk (not shown), a magnetic disk drive 328 for reading from or writing to a removable magnetic disk 329, and an optical disk drive 330 for reading from or writing to a removable optical disk 331 such as a CD-ROM or other optical media. The hard disk drive 327, magnetic disk drive 328, and optical disk drive 330 are connected to the system bus 323 by a hard disk drive interface 332, a magnetic disk drive interface 333, and an optical drive interface 334, respectively. The drives and their associated computer-readable media provide non-volatile storage of computer readable instructions, data structures, program modules and other data for the computer 320.

Although the exemplary environment described herein employs a hard disk, a removable magnetic disk 329, and a removable optical disk 331, it should be appreciated that other types of computer readable media which can store data that is accessible by a computer may also be used in the exemplary operating environment. Such other types of media include, but are not limited to, a magnetic cassette, a flash memory card, a digital video or versatile disk, a Bernoulli cartridge, a random access memory (RAM), a read-only memory (ROM), and the like.

A number of program modules may be stored on the hard disk, magnetic disk 329, optical disk 331, ROM 324 or RAM 325, including an operating system 335, one or more application programs 336, other program modules 337 and program data 338. A user may enter commands and information into the computer 320 through input devices such as a keyboard 340 and pointing device 342. Other input devices (not shown) may include a microphone, joystick, game pad, satellite disk, scanner, or the like. These and other input devices are often connected to the processing unit 321 through a serial port interface 346 that is coupled to the system bus, but may be connected by other interfaces, such as a parallel port, game port, or universal serial bus (USB). A monitor 347 or other type of display device is also connected to the system bus 323 via an interface, such as a video adapter 348. In addition to the monitor 347, a computer may include other peripheral output devices (not shown), such as speakers and printers. The exemplary system of Figure 3 also includes a host adapter 355, a Small Computer System Interface (SCSI) bus 356, and an external storage device 362 connected to the SCSI bus 356.

The computer 320 may operate in a networked environment using logical connections to one or more remote computers, such as a remote computer 349. The remote computer 349 may be a personal computer, a server, a router, a network PC, a peer device or other common network node, and may include many or all of the elements described above relative to the computer 320, although only a memory storage device 350 has been illustrated in Figure 3. The logical connections depicted in Figure 3 include a local area network (LAN) 351 and a wide area network (WAN) 352. Such networking environments are commonplace in offices, enterprise-wide computer networks, intranets, and the Internet.

When used in a LAN networking environment, the computer 320 is connected to the LAN 351 through a network interface or adapter 353. When used in a WAN networking environment, the computer 320 may include a modem 354 or other means for establishing communications over the wide area network 352, such as the Internet. The modem 354, which may be internal or external, is connected to the system bus 323 via the serial port interface 346. In a networked environment, program modules depicted relative to the computer 320, or portions thereof, may be stored in the remote memory storage device. It will be appreciated that the network connections shown are exemplary and other means of establishing a communications link between the computers may be used.

Computer 320 may include a variety of computer readable storage media. Computer readable storage media can be any available media that can be accessed by computer 320 and includes both volatile and nonvolatile media, removable and non-removable media. By way of example, and not limitation, computer readable media may comprise computer storage media and communication media. Computer storage media include both volatile and nonvolatile, removable and non-removable media implemented in any method or technology for storage of information such as computer readable instructions, data structures, program modules or other data. Computer storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 320. Combinations of any of the above should also be included within the scope of computer readable media that may be used to store source code for implementing the methods and systems described herein. Any combination of the features or elements disclosed herein may be used in one or more embodiments.

In describing preferred embodiments of the subject matter of the present disclosure, as illustrated in the Figures, specific terminology is employed for the sake of clarity. The claimed subject matter, however, is not intended to be limited to the specific terminology so selected, and it is to be understood that each specific element includes all technical equivalents that operate in a similar manner to accomplish a similar purpose.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method comprising:
injecting a gas into an air flow;
mixing the gas with the air;
measuring concentration of the gas mixed with the air; and
calculating air mass flow rate based on the measured concentration of the gas.

2. The method of claim 1, further comprising:
recording the amount of the gas injected into the air flow; and
calculating the air mass flow rate based on the measured concentration of the gas and the recorded amount of gas injected.

3. The method of claim 1 or claim 2, wherein the injected gas is an inert gas, preferably comprising neon.

4. The method of any preceding claim, further comprising:
automatically controlling a device based on the calculated air mass flow rate.

5. The method of any preceding claim, further comprising:
automatically controlling a device based on the measured concentration of gas mixed with air.

6. The method of any preceding claim, wherein the gas is injected before a filter of a turbine inlet.

7. The method of any preceding claim, wherein the measurement of the concentration of the gas mixed with the air is done within a compressor.

8. The method of any preceding claim, wherein the gas is mixed with air by a filter (120).

9. A system comprising:
a gas meter (125); and
a processor (135) that receives a measurement of a concentration of a gas from the gas meter (125) and calculates air mass flow rate based on the measured concentration.

10. The system of claim 9, wherein the processor (135) automatically controls a device based on the calculated air mass flow rate.

11. The system of claim 10, wherein the device is a gas turbine (GT) or a combustor.

12. The system of claim 9, 10 or 11, wherein the processor (135) automatically controls a device based on the concentration measurement.

13. The system of any one of claims 9 to 12, further comprising a filter (120) that mixes the gas with the air.

14. The system of any one of claims 9 to 13, wherein the gas is an inert gas; and
inert gas is injected into an inlet before a filter, and/or
the gas meter (125) measures the concentration of inert gas within a compressor.

15. The system of any one of claims 7 to 14, wherein the processor (135) calculates the air mass flow rate based on the measured concentration and a recorded amount of the gas injected upstream from the gas meter.
